# EUROPÄISCHE PATENTANMELDUNG

(11) **EP 2 584 379 A1**
(43) Veröffentlichungstag der Anmeldung: **24.04.2013**
(21) Anmeldenummer: 11186043.3
(22) Anmeldetag: 20.10.2011
(51) Int. Cl.: G01T 1/20, G01T 1/24, G01T 1/40

(54) **Verfahren zum Betreiben eines Szintillationszählers und Szintillationszähler**

(71) Anmelder: Berthold Technologies GmbH & Co. KG, 75323 Bad Wildbad (DE)
(72) Erfinder: Freiburger, Ewald, 75245 Neulingen (DE); Dr. Briggmann, Jürgen, 70195 Stuttgart (DE); Dr. Mörmann, Dirk, 76476 Bischweier (DE)
(74) Vertreter: Patentanwälte Ruff, Wilhelm, Beier, Dauster & Partner

(57) **Zusammenfassung**

Ein Verfahren zum Betreiben eines Szintillationszählers (100) mit einem optischen Detektor (20) in Form einer, insbesondere einer einzelnen, Avalanche-Photodiode oder eines Halbleiter-Photomultipliers weist folgende Schritte auf: Durchführen einer automatischen Driftkompensation, wobei die automatische Driftkompensation die Schritte umfasst: Regeln eines Verhältnisses einer Zählrate von Ereignissen mit einer Energie, die größer als ein erster Schwellenwert ist, und einer Zählrate von Ereignissen mit einer Energie, die größer als ein zweiter Schwellenwert ist, auf eine vorgegebene erste Funktion, insbesondere auf einen vorgegebenen ersten Sollwert, und/oder Regeln einer Zählrate von Ereignissen mit einer Energie, die größer als ein dritter Schwellenwert ist, auf eine zweite vorgegebene Funktion, insbesondere auf einen zweiten Sollwert.

## Beschreibung

Die Erfindung betrifft ein Verfahren zum Betreiben eines Szintillationszählers und einen Szintillationszähler.

In der Prozessmesstechnik werden zur Messung von Prozessgrößen oder Materialeigenschaften, beispielsweise zur Füllstandsmessung, zur Feuchtigkeitsmessung, zur Dichtemessung etc., häufig radiometrische Messsysteme verwendet, die Szintillationszähler bzw. Szintillationsdetektoren zur Strahlungsmessung umfassen.

Szintillationszähler dienen beispielsweise zur Bestimmung des Spektrums von ionisierender Strahlung, d.h. der Bestimmung der Intensität als Funktion der Energie der ionisierenden Strahlung, wobei ein Szintillationszähler einen Szintillator umfasst, der beim Durchgang von Strahlung in Form von energiereichen geladenen Teilchen oder Photonen angeregt wird und die Anregungsenergie in Form von Lichtimpulsen (meist im UV- oder sichtbaren Bereich) wieder abgibt, was als Szintillation bezeichnet wird.

Die derart erzeugten Lichtimpulse werden mit einem geeigneten optischen Detektor in elektrische Signale umgewandelt und verstärkt. Ein solcher Detektor ist typischerweise ein Photomultiplier oder eine PIN-Photodiode. Der optische Detektor gibt Impulse aus, wobei eine Anzahl von Impulsen pro Zeiteinheit, d.h. die Zählrate, ein Maß für die Intensität der Strahlung ist und eine Impulshöhe bzw. Impulsamplitude (genauer ein Integral über dem zeitlichen Verlauf des Impulses) ein Maß für die Energie der Strahlung ist.

Zur Messung einer Prozessgröße in Form eines Füllstands in einem Behälter kann beispielsweise der Behälter an einer Seite mit der Strahlung einer Nutzstrahlungsquelle beaufschlagt werden und eine Intensität der Strahlung auf der gegenüberliegenden Seite der Nutzstrahlungsquelle mittels eines Szintillationszählers gemessen werden. Die gemessene Intensität bzw. Zählrate hängt vom Füllstand des Behälters ab, da beim Vorhandensein von Messgut im Strahlenpfad ein Teil der Strahlung durch das Messgut absorbiert wird, d.h. der Füllstand kann in Abhängigkeit von der gemessenen Zählrate bestimmt werden.

Die gemessene Zählrate unterliegt jedoch Drifteffekten, die beispielsweise durch Temperaturschwankungen, Alterungseffekte des Szintillators und/oder des optischen Detektors und/oder Drifteffekte in einer Auswerteelektronik verursacht werden können. Diese Drifteffekte führen zu Messfehlern, die eine zuverlässige Ermittlung der Prozessgröße unmöglich machen können.

Ein Verfahren zur automatischen Driftkompensation eines Szintillationszählers ist beispielsweise in der Patentschrift DE 18 09 520 beschrieben.

Zur Driftkompensation wird typisch eine erste Zählrate von Impulsen bestimmt, deren Energieniveau bzw. Impulshöhe über einer ersten vorgebbaren Schwelle liegt, und eine zweite Zählrate von Impulsen bestimmt, deren Energieniveau bzw. Impulshöhe über einer zweiten vorgebbaren Schwelle liegt.

Die Impulshöhe hängt, neben der Energie des beobachteten Teilchens bzw. Photons, auch von einer Gesamtverstärkung bzw. einem Gesamtverstärkungsfaktor des Szintillationszählers ab, die bzw. der bei einer gegebenen Energie des auf den Szintillator auftreffenden Teilchens bzw. Photons die Impulshöhe bestimmt.

Die Verstärkung wird bei Verwendung von Photomultipliern unter anderem durch einen Pegel einer Hochspannung, mit der der Photomultiplier beaufschlagt wird, und durch die Verstärkung einer Auswerteelektronik bestimmt, die aus dem vom Photomultiplier ausgegebenen Signal durch analoge Aufbereitung ein Signal in einem Pegelbereich erzeugt, der beispielsweise zur digitalen Auswertung mittels eines Komparators und eines nachgeschalteten Mikroprozessors geeignet ist. Die Veränderung der Gesamtverstärkung, beispielsweise durch Änderung der den Photomultiplier versorgenden Hochspannung, bewirkt eine Veränderung des durch den Szintillationszähler gemessenen Spektrums in Energie-Richtung, wodurch sich ein Zählratenverhältnis zwischen der ersten Zählrate und der zweiten Zählrate verändert. Es hat sich gezeigt, dass das Zählratenverhältnis bei geeigneter Wahl der Schwellen im Wesentlichen nur von der verwendeten Nutzstrahlungsquelle bestimmt wird und beispielsweise bei einer Füllstandsmessung nicht wesentlich vom Füllstand abhängt. Folglich kann eine Driftkompensation dadurch erzielt werden, dass die Gesamtverstärkung derart nachgeführt wird, dass das Zählratenverhältnis einer vorgegebenen Funktion entspricht, insbesondere konstant bleibt.

Diese Art der Driftkompensation setzt jedoch voraus, dass die Verstärkung im Zuge eines Kompensationsvorgangs derart einstellbar ist, dass sich das gewünschte Zählratenverhältnis ergibt.

Wenn die Verwendung von Photomultipliern als optische Detektoren applikationsbedingt ausscheidet, beispielsweise falls in der Messumgebung starke Magnetfelder vorhanden sind, werden herkömmlich PIN-Photodioden als optische Detektoren verwendet. Da PIN-Photodioden jedoch keinen intrinsischen Verstärkungsmechanismus aufweisen, zeigen diese ein unbefriedigendes Signal/Rausch-Verhältnis sowie eine starke Temperatur- und Alterungsabhängigkeit. Das unbefriedigende Signal/Rausch-Verhältnis macht es praktisch unmöglich, die Temperatur- und Alterungsabhängigkeit im Rahmen einer Driftkompensation durch geeignete Regelungsmaßnahmen auszugleichen und gleichzeitig eine hohe Nachweisempfindlichkeit für lichtschwache Szintillationsblitze sicherzustellen.

Der Erfindung liegt daher die Aufgabe zugrunde, ein Verfahren zum Betreiben eines Szintillationszählers bzw. Szintillationsdetektors und einen Szintillationszähler bzw. Szintillationsdetektor zur Verfügung zu stellen, die auch in Anwesenheit von Störquellen, insbesondere in Anwesenheit von starken Magnetfeldern, einen störungssicheren Betrieb bei gleichzeitiger Kompensation von temperatur- und alterungsbedingten Effekten ermöglichen.

Die Erfindung löst diese Aufgabe durch ein Verfahren mit den Merkmalen des Anspruchs 1 und einen Szintillationszähler mit den Merkmalen des Anspruchs 7.

Bevorzugte Ausführungsformen sind Gegenstand der Unteransprüche, deren Wortlaut durch Bezugnahme zum Inhalt der Beschreibung gemacht wird, um unnötige Wiederholungen zu vermeiden.

Das Verfahren dient zum Betreiben eines Szintillationszählers mit einem optischen Detektor bzw. Sensor, d.h. einem Bauelement, das Licht in Strom bzw. Spannung umwandelt. Als optischer Detektor wird eine Avalanche-Photodiode, insbesondere eine einzelne Avalanche-Photodiode, oder ein Halbleiter-Photomultiplier verwendet, der auch als Solid-State Photomultiplier bezeichnet wird. Das Verfahren weist folgende Schritte auf: Durchführen einer automatischen Driftkompensation, wobei die automatische Driftkompensation die Schritte umfasst: Regeln eines Verhältnisses (V = Z1/Z2 oder V = Z2/Z1) einer Zählrate Z1 von Ereignissen mit einer Energie, die größer als ein erster Schwellenwert ist, beispielsweise 10keV für eine spezifische Strahlungsquelle, und einer Zählrate Z2 von Ereignissen mit einer Energie, die größer als ein zweiter Schwellenwert ist, beispielsweise 680keV für eine spezifische Strahlungsquelle, auf eine vorgegebene erste Funktion, insbesondere auf einen vorgegebenen ersten Sollwert, was einer herkömmlichen Verhältnisregelung entspricht. Alternativ oder zusätzlich können zur Driftkompensation folgende Schritte vorgesehen sein: Regeln einer Zählrate von Ereignissen mit einer Energie, die größer als ein dritter Schwellenwert ist, beispielsweise 2MeV für eine spezifische Strahlungsquelle, auf eine zweite vorgegebene Funktion, insbesondere auf einen zweiten Sollwert, was einer herkömmlichen Absolutwertregelung entspricht. Der zweite Schwellenwert und der dritte Schwellenwert können identisch sein. Die Verwendung von Avalanche-Photodioden oder von Halbleiter-Photomultipliern ermöglicht zunächst den Einsatz des Szintillationszählers auch in störungsbehafteter Umgebung, beispielsweise in einer Umgebung mit starken Magnetfeldern. Anders als bei PIN-Photodioden ist zusätzlich eine effektive Driftkompensation möglich, da diese optischen Detektoren einen ausreichend großen Signal/Rausch-Abstand aufweisen, um Temperatur- und Alterungseffekte ausregeln zu können, beispielsweise durch Verändern der Verstärkung.

In einer Weiterbildung ist die Avalanche-Photodiode eine Reverse-Structure Avalanche-Photodiode (APD), wie sie beispielsweise exemplarisch von Hamamatsu mit der Typenbezeichnung APD S8664 angeboten wird. In einer Reverse-Structure APD findet Elektronenmultiplikation nur im oberflächennahen Volumen des Festkörpers statt. Dadurch kann prinzipbedingt ein deutlich höherer Signal/Rausch-Abstand erzielt werden.

In einer Weiterbildung ist der Halbleiter-Photomultiplier ein Silizium-Photomultiplier (SiPM), wie er beispielsweise exemplarisch von Hamamatsu mit der Typenbezeichnung S10362 angeboten wird. Durch die hohe intrinsische Verstärkung einzelner Detektorelemente, die den SiPM bilden, von bis zu 10⁶ ist ein sehr gutes Signal/Rausch-Verhältnis gegeben. Weitere Vorteile von SiPMs sind ihre kleine erforderliche Betriebsspannung, die kompakte Bauweise und die Unabhängigkeit von der Anwesenheit von Magnetfeldern.

In einer Weiterbildung dient als Stellgröße der Regelung eine Biasspannung oder Betriebsspannung der Avalanche-Photodiode oder des Halbleiter-Photomultipliers. Mittels der Biasspannung kann eine Verstärkung der Avalanche-Photodiode bzw. des Halbleiter-Photomultipliers zur Driftkompensation geeignet nachgeführt werden, wobei hierzu beispielsweise die Biasspannung eines Silizium-Photomultipliers in einem Spannungsbereich von ca. 20V bis 25V eingestellt werden kann.

Zusätzlich oder alternativ kann als Stellgröße der Regelung ein Verstärkungsfaktor einer Verstärkerschaltung verwendet werden, mittels der ein durch den optischen Detektor erzeugtes Signal verstärkt wird.

Zusätzlich oder alternativ kann als Stellgröße der Regelung eine Komparatorschwelle mindestens eines Komparators verwendet werden, mittels dessen ein Zählersignal nur dann erzeugt wird, wenn ein durch den optischen Detektor erzeugtes Signal die Komparatorschwelle übersteigt. Der Szintillationszähler weist einen optischen Detektor in Form einer, insbesondere einer einzelnen, Avalanche-Photodiode oder eines Halbleiter-Photomultipliers und eine Steuereinrichtung auf, wobei die Steuereinrichtung zur Durchführung des oben genannten Verfahrens ausgebildet ist.

In einer Weiterbildung ist die Avalanche-Photodiode eine Reverse-Structure Avalanche-Photodiode.

In einer Weiterbildung ist der Halbleiter-Photomultiplier ein Silizium-Photomultiplier.

In einer Weiterbildung ist eine Verstärkerschaltung vorgesehen, die dazu ausgebildet ist, ein durch den optischen Detektor erzeugtes Signal zu verstärken.

In einer Weiterbildung ist mindestens ein Komparator mit einer einstellbaren Komparatorschwelle vorgesehen, wobei der Komparator dazu ausgebildet ist, ein Zählersignal nur dann zu erzeugen, wenn ein durch den optischen Detektor erzeugtes Signal die Komparatorschwelle übersteigt.

Ausführungsformen der Erfindung sind in den Zeichnungen schematisch dargestellt und werden im Folgenden näher erläutert. Hierbei zeigt:
- Fig. 1: einen Szintillationszähler mit einem optischen Detektor in Form einer Avalanche-Photodiode oder eines Silizium-Photomultipliers und
- Fig. 2: ein Energiespektrum einer Nutzstrahlungsquelle mit zugehörigen Schwellenwerten.

Wenn ein Element als mit einem anderen Element gekoppelt oder verbunden bezeichnet wird, kann das Element mit dem anderen Element unmittelbar gekoppelt bzw. verbunden sein oder es können zwischengeschaltete Elemente vorhanden sein. Wenn jedoch ein Element als mit einem anderen Element direkt gekoppelt oder direkt verbunden bezeichnet wird, sind keine zwischengeschalteten Elemente vorhanden.

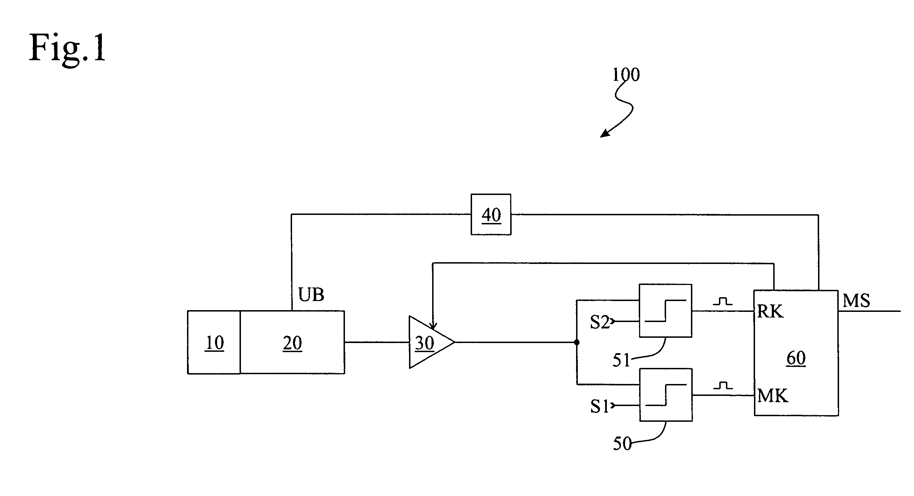

Fig. 1 zeigt einen Szintillationszähler 100 mit einem Szintillator in Form eines Nal(TI)-Kristalls 10, der mit einem optischen Detektor in Form eines Silizium-Photomultipliers (SiPMs) 20 optisch gekoppelt ist. Anstatt des SiPMs 20 kann auch eine Reverse-Structure Avalanche-Photodiode verwendet werden. Die nachfolgenden Ausführungen gelten für eine solche Reverse-Structure Avalanche-Photodiode entsprechend.

Der SiPM 20 wird mit einer Biasspannung bzw. einer Betriebsspannung UB beaufschlagt und erzeugt elektrische Impulse mit einem Betrag bzw. einer Amplitude, der bzw. die von der Biasspannung UB und der Energie eines beobachteten Teilchens bzw. Photons abhängt. Die Biasspannung UB wird von einem Spannungsgenerator 40 mit einem Pegel erzeugt, der von einem Mikroprozessor 60 geeignet eingestellt wird.

Ein Verstärker 30 dient zur Verstärkung von elektrischen Impulsen, die mittels des SiPMs 20 beim Vorhandensein von Strahlung erzeugt werden. Optional kann mittels einer vom Mikroprozessor erzeugten Steuerspannung UGain ein Verstärkungsfaktor des Verstärkers 30 verändert werden.

Ein erster Komparator 50 und ein zweiter Komparator 51 sind mit einem Ausgang des Verstärkers 30 gekoppelt. Der erste Komparator 50 erzeugt an seinem Ausgang einen Impuls, wenn der Betrag des durch den SiPM 20 erzeugten Impulses bzw. eine Impulshöhe oder Impulsamplitude über einer ersten Schwelle S1 liegt. Der zweite Komparator 51 erzeugt an seinem Ausgang einen Impuls, wenn der Betrag des durch den SiPM 20 erzeugten Impulses über einer zweiten Schwelle S2 liegt, wobei die zweite Schwelle S2 über der ersten Schwelle S1 liegt.

Der Mikroprozessor 60 ist mit einem Regelkanaleingang RK mit dem Ausgang des zweiten Komparators 51 verbunden und mit einem Messkanaleingang MK mit dem Ausgang des ersten Komparators 50 verbunden.

Der Mikroprozessor 60 bildet unter anderem eine Driftkompensationseinheit und ist derart programmiert, dass er im Zuge einer Verhältnisregelung mittels geeigneter Ansteuerung des Spannungsgenerators 40 die Biasspannung UB als Stellgröße derart nachführt, dass ein Verhältnis V = Z1/Z2 oder V = Z2/Z1 zwischen einer Zählrate Z1 der Impulse am Ausgang des ersten Komparators 50 und einer Zählrate Z2 der Impulse am Ausgang des zweiten Komparators 51 einer vorgegebenen Funktion entspricht, insbesondere konstant bleibt.

Alternativ kann der Mikroprozessor 60 derart programmiert sein, dass er mittels geeigneter Ansteuerung des Spannungsgenerators 40 die Biasspannung UB derart nachführt, dass das Verhältnis zwischen der Zählrate der Impulse am Ausgang des ersten Komparators 50 und der Zählrate der Impulse am Ausgang des zweiten Komparators 51 der vorgegebenen Funktion entspricht, insbesondere konstant bleibt, wenn die Zählrate am Messkanaleingang MK unter einer vorgegebenen Schwelle liegt, und dass er mittels geeigneter Ansteuerung des Spannungsgenerators 40 die Biasspannung UB im Zuge einer Absolutwertregelung derart nachführt, dass die absolute Zählrate am Regelkanaleingang RK konstant bleibt, wenn die Zählrate über der vorgegebenen Schwelle liegt.

Alternativ oder zusätzlich zur Biasspannung UB als Stellgröße kann/können eine Verstärkung des Verstärkers 30 und/oder die Komparatorschwellen S1 und/oder S2 als geeignete Stellgrößen dienen.

Der Mikroprozessor 70 gibt ein Messsignal MS aus, das in Abhängigkeit von der Zählrate am Messkanaleingang MK den Wert einer Prozessgröße, beispielsweise einen Füllstand eines Behälters, abbildet.

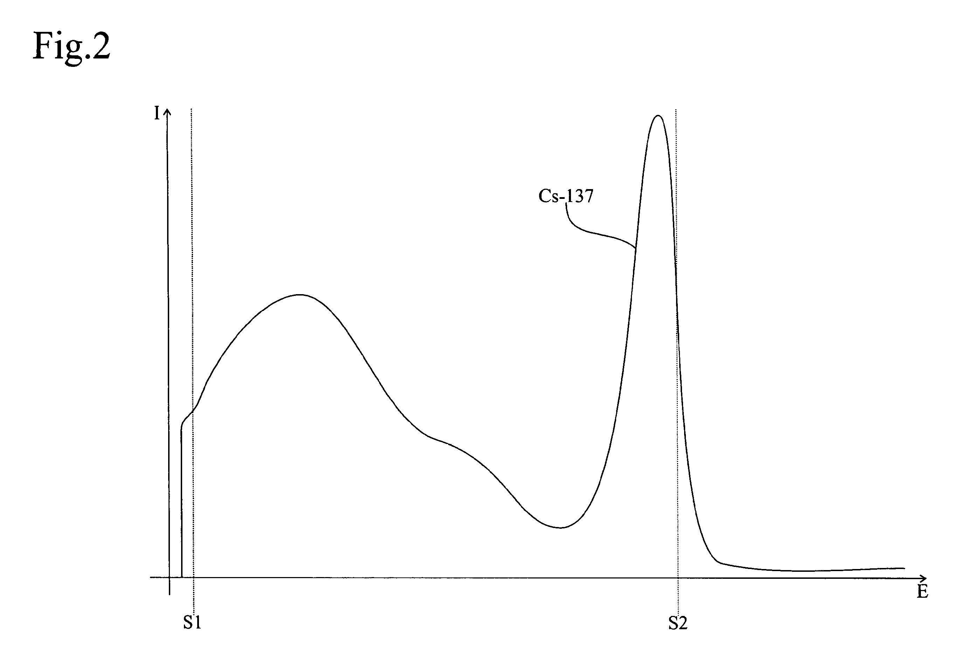

Fig. 2 zeigt ein Energiespektrum Cs-137 einer Cs-137-Strahlungsquelle mit zugehörigen (Energie-)Schwellenwerten S1 und S2 (siehe auch Fig. 1 mit den entsprechenden Komparatorschwellen S1 und S2). Auf der X-Achse ist die Energie E und auf der Y-Achse die Intensität I, d.h. die Zählrate, aufgetragen.

Wie aus Fig. 2 hervorgeht, ist die Messschwelle S1 derart gewählt, dass im Wesentlichen alle vom Szintillator 10 nachgewiesenen Photonen der Cs-137-Strahlungsquelle zu einem Impuls am Messkanaleingang MK führen. Die Regelschwelle S2 ist derart gewählt, dass nur Photonen leicht oberhalb des Maximums des so genannten Photopeaks bei 662keV zu einem Impuls am Regelkanaleingang RK führen. Im einfachsten Fall einer Driftkompensation wird die Zählrate dieser Impulse konstant gehalten. Andernfalls wird ein Verhältnis zwischen der Zählrate der Impulse am Regelkanaleingang RK und am Messkanaleingang MK konstant gehalten.

Die gezeigten Ausführungsformen ermöglichen auch in Anwesenheit von Störquellen, insbesondere in Anwesenheit von starken Magnetfeldern, einen störungssicheren Betrieb des Szintillationszählers bei gleichzeitiger Kompensation von temperatur- und alterungsbedingten Effekten.

## Patentansprüche

1. Verfahren zum Betreiben eines Szintillationszählers (100) mit einem optischen Detektor (20) in Form einer, insbesondere einer einzelnen, Avalanche-Photodiode oder eines Halbleiter-Photomultipliers, mit den Schritten:
- Durchführen einer automatischen Driftkompensation, wobei die automatische Driftkompensation die Schritte umfasst:
- Regeln eines Verhältnisses einer Zählrate von Ereignissen mit einer Energie, die größer als ein erster Schwellenwert ist, und einer Zählrate von Ereignissen mit einer Energie, die größer als ein zweiter Schwellenwert ist, auf eine vorgegebene erste Funktion, insbesondere auf einen vorgegebenen ersten Sollwert, und/oder
- Regeln einer Zählrate von Ereignissen mit einer Energie, die größer als ein dritter Schwellenwert ist, auf eine zweite vorgegebene Funktion, insbesondere auf einen zweiten Sollwert.

2. Verfahren nach Anspruch 1, **dadurch gekennzeichnet, dass** die Avalanche-Photodiode eine Reverse-Structure Avalanche-Photodiode ist.

3. Verfahren nach Anspruch 1 oder 2, **dadurch gekennzeichnet, dass** der Halbleiter-Photomultiplier ein Silizium-Photomultiplier ist.

4. Verfahren nach einem der vorhergehenden Ansprüche, **dadurch gekennzeichnet, dass** als Stellgröße der Regelung eine Biasspannung (UB) der Avalanche-Photodiode oder des Halbleiter-Photomultipliers dient.

5. Verfahren nach einem der vorhergehenden Ansprüche, **dadurch gekennzeichnet, dass** als Stellgröße der Regelung ein Verstärkungsfaktor einer Verstärkerschaltung (30) dient, mittels der ein durch den optischen Detektor erzeugtes Signal verstärkt wird.

6. Verfahren nach einem der vorhergehenden Ansprüche, **dadurch gekennzeichnet, dass** als Stellgröße der Regelung eine Komparatorschwelle (S1, S2) mindestens eines Komparators (50, 51) dient, mittels dessen ein Zählersignal nur dann erzeugt wird, wenn ein durch den optischen Detektor erzeugtes Signal die Komparatorschwelle übersteigt.

7. Szintillationszähler mit einem optischen Detektor (20) in Form einer, insbesondere einer einzelnen, Avalanche-Photodiode oder eines Halbleiter-Photomultipliers, mit
- einer Steuereinrichtung (60),
**dadurch gekennzeichnet, dass**
- die Steuereinrichtung zur Durchführung des Verfahrens nach einem der Ansprüche 1 bis 6 ausgebildet ist.

8. Szintillationszähler nach Anspruch 7, **dadurch gekennzeichnet, dass** die Avalanche-Photodiode eine Reverse-Structure Avalanche-Photodiode ist.

9. Szintillationszähler nach Anspruch 7 oder 8, **dadurch gekennzeichnet, dass** der Halbleiter-Photomultiplier ein Silizium-Photomultiplier ist.

10. Szintillationszähler nach einem der Ansprüche 7 bis 9, **gekennzeichnet durch** Verstärkerschaltung (30), die dazu ausgebildet ist, ein **durch** den optischen Detektor erzeugtes Signal zu verstärken.

11. Szintillationszähler nach einem der Ansprüche 7 bis 10, **gekennzeichnet durch** mindestens einen Komparator (50, 51) mit einer einstellbaren Komparatorschwelle (S1, S2), wobei der Komparator dazu ausgebildet ist, ein Zählersignal nur dann zu erzeugen, wenn ein **durch** den optischen Detektor erzeugtes Signal die Komparatorschwelle übersteigt.
